# EUROPÄISCHE PATENTANMELDUNG

(11) **EP 0 687 650 A1**
(43) Veröffentlichungstag der Anmeldung: **20.12.1995**
(21) Anmeldenummer: 95108996.0
(22) Anmeldetag: 12.06.1995
(51) Int. Cl.: C01B 31/34

(54) **Verfahren und Vorrichtung zur schmelzmetallurgischen Herstellung von Hartstoffen**

(30) Priorität: 13.06.1994 DE 4420496
(71) Anmelder: WOKA Schweisstechnik GmbH, D-47877 Willich (DE)
(72) Erfinder: Kostmann, Cris, D-01307 Dresden (DE); Stephani, Günter, D-01309 Dresden (DE); Findeisen, Eberhard, D-47877 Willich (DE)
(74) Vertreter: Hiebsch, Gerhard F., Dipl.-Ing.

(57) **Zusammenfassung**

Bei einem Verfahren zur schmelzmetallurgischen Herstellung von Harstoffen oder Oxiden mit rascherstarrter, extrem feiner Gefügestruktur in sphärischer Morphologie, werden pulverförmige oder feste Einsatzstoffe (G) durch Plasma geschmolzen und danach durch rasche Abkühlung zur Erstarrung geführt. Die Einsatzstoffe werden mit einer Plasmaflamme (30) geschmolzen, wobei das Plasma mittels Argon, Helium oder Wasserstoff bzw. Gemischen daraus erzeugt werden sollen.

Hierzu wird eine Vorrichtung eingesetzt, die einen bewegbar angebrachten Plasmabrenner (32) über einer Zuführung (27) für das Einsatzgut (G) aufweist, welche über einer schnell bewegbaren gekühlten Oberfläche (18) vorgesehen ist. Letztere wird von einer rotierenden Scheibe (16) angeboten, über der eine aus Graphit bestehende und gegebenenfalls beschichtete Düse (40) angeordnet ist.

## Beschreibung

Die Erfindung betrifft ein Verfahren sowie eine Vorrichtung zur schmelzmetallurgischen Herstellung von kugeligen Hartstoffen, vorzugsweise von Wolframkarbid, oder Oxiden.

Durch die DE-PS 36 26 031 ist die Erzeugung von Wolframschmelzkarbid (WSC) bekannt, wobei vorkompaktierte und vorgesintertes Wolframkarbid (WC) im Lichtbogenofen unter Schutzgas bzw. Vakuum erschmolzen und auf geeigneten wassergekühlten Oberflächen bzw. drehenden Kokillen abgeschreckt wird. Die entstehenden Produkte bestehen aus WC-Platten und -Bruchstücken, d.h. sie weisen keine reproduzierbare Geometrie auf. Da die Eigenschaften eng mit den Erstarrungsbedingungen korrellieren, ist somit auch keine Homogenität insbesondere der Eigenschaften zu erwarten.

In der DE-OS 36 08 693 wird die Herstellung von kugeligem Wolframschmelzkarbid beschrieben; ausgehend von Wolfram- und Kohlenstoffpulver mittels Lichtbogen, wird eine WC-Schmelze erzeugt und kontinuierlich einem Drehteller zugeführt. Durch die Rotationsgeschwindigkeit des Drehtellers wird die Schmelze in feine Tropfen zerstäubt, wobei diese im freien Flug in Kugelform erstarren. Durch dieses Verfahren wird nicht in jedem Falle kugeliges WSC erhalten, sondern auch ein Anteil an spratzigem Material.

Die zur US-PS 4.723.996 homologe französische Patentanmeldung 2.595.716 offenbart die Herstellung von sphärischem WSC durch das Erschmelzen von WC in einem Induktionsofen und Zerstäuben der Schmelze. Das Verfahren arbeitet halbkontinuierlich, weil nach dem Aufschmelzen im Induktionsofen dieser ganz oder teilweise entleert werden muß, um die Schmelze in Kügelchen zu zerteilen. Ein weiterer Nachteil des Verfahrens besteht darin, daß es bei Verwendung von Graphittiegeln sowie den für die Reaktion von Wolfram mit Kohlenstoff notwendigen hohen Temperaturen zu erheblichen Problemen beim Einstellen exakter Kohlenstoff-Gehalte kommt, die anderseits aber notwendige Voraussetzung für das Erreichen der Eigenschaften sind. Zudem kommt es zu einem hohen Verschleiß an Schmelztiegeln, welcher die Herstellungskosten wesentlich erhöht.

Die erwähnten Hartstoffe, insbesondere das WSC, werden bei der Herstellung von Aufpanzerungen von Werkzeugen, z.B. für die Bergbau- und Erdölindustrie, eingesetzt. Die steigenden Anforderungen -- vor allem eine Erhöhung der Standzeit der Werkzeuge sowie eine effizientere Regenerierung --erfordern es jedoch, daß die bisher eingesetzten Hartstoffe, insbesondere das WSC, in noch stärkerem Maße den Erfodernissen angepaßt und abgestimmt werden.

Der Erfindung liegt die Aufgabe zugrunde, ein Verfahren bzw. eine Vorrichtung zu entwickeln, das/die universell für die Erzeugung von Hartstoffen mit sphärischer Morphologie geeignet ist, vorzugsweise für Wolframkarbid, welche in ihren Eigenschaften, beispielsweise der Härte, gegenüber den Produkten bisher bekannter Verfahren zur Herstellung von Hartstoffen deutlich verbessert sind. Außerdem soll dieses Verfahren zur Produktion sphärischer Oxidwerkstoffe geeignet sein.

Zur Lösung dieser Aufgabe führt die Lehre der unabhängigen Patentansprüche; die Unteransprüche geben günstige Weiterbildungen an.

Erfindungsgemäß wird der Hartstoff, z.B. Wolframkarbid, mittels Plasmaflamme erschmolzen. Die Erschmelzung mit Plasma als Energieträger hat den großen Vorteil, daß die Schmelzzeit aus Gründen des hohen Energieeintrages stark reduziert zu werden vermag. Anderseits kann die Schmelztemperatur ohne große Probleme auf die gewünschte Gießtemperatur gebracht werden.

Vorteilhafterweise wirkt sich ein Überhitzen der Schmelze günstig auf die Teilchenbildung, -größe und -morphologie aus. Außerdem gelingt es mittels Plasma -- durch die Möglichkeit der Überhitzung -- die erzeugte Schmelze von schädlichen Verunreinigungen (durch Verdampfen) zu befreien; beim Arbeiten mittels eines Lichtbogenofens ist eine definierte Temperatur -- vor allem bei den notwendigen hohen Temperaturen zur Harstoffbildung bzw. zum Aufschmelzen von vorgebildeten Hartstoffen -- nicht reproduzierbar einstellbar.

Mit der erfindunsgemäß entwickelten Plasmaschmelztechnologie für Hartstoffe ist es möglich, sowohl die Hartstoffschmelze aus Elementpulvern als auch aus vorgesinterten bzw. vorgeschmolzenen Hartstoffen herzustellen. Von Vorteil ist weiterhin, daß das zur Erzeugung des Plasmazustandes notwendige Gas -- etwa Argon, Helium -- gleichzeitig als Schutzgas genutzt zu werden vermag.

Nach der Herstellung der Hartstoffschmelze wird diese auf eine schnell rotierende Abkühlscheibe geleitet, wobei sich ein definierter Schmelzestrahl als günstig erwiesen hat. Die Schmelze kann vorteilhafterweise durch eine beheizte Graphitdüse geleitet werden, wodurch jener definierte homogene Schmelzestrahl entsteht, der die redproduzierbare Erzeugung von hochwertigen sphärischen Hartstoffen, vorzugsweise von WSC, ermöglicht.

Die schnell rotierende Abkühlscheibe ist bevorzugt mit einer Wasserkühlung versehen, wobei zur Erzeugung sehr feiner Hartstoffkugeln (0 < 100 µm) erfindungsgemäß sehr hohe Umdrehungsgeschwindigkeit (5.000 - 20.000 U/min) notwendig sind.

Überraschenderweise konnte weiterhin gefunden werden, daß gleichfalls durch die Schmelztemperatur Einfluß genommen werden kann auf die Feinheit der Hartstoff-Kügelchen. So kann z.B. der Durchmesser der WSC-Kügelchen pro 50°C Schmelztemperaturüberhitzung um 15 bis 20 % verringert werden. Die Ursachen liegen wohl in der mit zunehmender Schmelztemperatur abnehmenden Viskosität bzw. Oberflächenspannung der Hartstoffschmelze.

Die nach dem erfindungsgemäßen Verfahren hergestellten Hartstoffe zeichnen sich durch ein extrem homogenes und feines Gefüge aus. Der Grund ist die rasche Erstarrung (Abkühlgeschwindigkeiten > 10⁴ K/s) der Schmelztröpfchen, die eine erhebliche Gefügefeinung -- d.h beispielsweise kleine Korngrößen, Lamellenabstände, Dendritenabstände --ermöglicht sowie die Segregation von Legierungselementen stark einschränkt bzw. unterbindet. Außerdem ist die Homogenität des Gefüges über den Erstarrungsquerschnitt sehr gut und als anderer Effekt der raschen Erstarrung anzusehen.

Eine weitere Verbesserung der Abkühlbedingungen kann durch eine zusätzliche Begasung der Schmelztröpfchen mit Gasen guter Wärmeleitfähigkeit -- beispielsweise He -- erreicht werden. Überraschenderweise nimmt z.B. die Härte der rascherstarrten Hartstoffe mit abnehmendem Durchmesser zu, wobei generell festzustellen ist, daß die mittels des erfindungsgemäßen Verfahrens hergestellten Hartstoffe wesentlich höhere Härten aufweisen als über andere Methoden hergestellte Hartstoffe. So wurden etwa an sphärischen WSC Härten zwischen 3000 und 3500 HV 0,5 gemessen, die also um nahezu 50 % bzw. 80 % über den Werten von solchem WSC liegen, die über Abguß in Formen bzw. mit gekühlten Kupferkokillen erzeugt worden ist.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt jeweils in einem skizzenhaften Querschnitt zwei Ausführungsbeispiele einer Vorrichtung zum Herstellung rascherstarrter kugeliger Hartstoffe.

In einem Pulverauffangbehälter 10 mit zylindrischer Umfangswand 12 ist über einem verschiebbaren Antriebssockel 14 eine wassergekühlte Scheibe 16 mit konkaver Oberfläche 18 auf einer zentrischen Drehachse 20 angeordnet. In der Mittellinie M jener Drehachse 20 verläuft oberhalb der Scheibe 16 und zu ihr in einem größten Abstand h eine Wehrkante 22 eines Fördersteges 24 für ein festes karbidisches oder oxidisches Einsatzgut Q; letzteres wird aus einem Silo 26 in Förderrichtung kantenwärts geführt sowie in einer Schmelzzone 28 vor jener Wehrkante 22 dem Strahl 30 eines Plasmabrenners 32 ausgesetzt, der schwenk- und hebbar an einem Brennerantrieb 24 festliegt.

Das in der Schmelzzone 28 erschmolzene Einsatzgut Q fällt in einem Schmelzestrom oder -stahl 29 auf die Oberfläche 18 der drehenden Scheibe 16 und wird von dieser an die zylindrische Umfangswand 12 des Pulverauffangbehälters 10 geschleudert, an der es zum Behälterboden 11 absinkt.

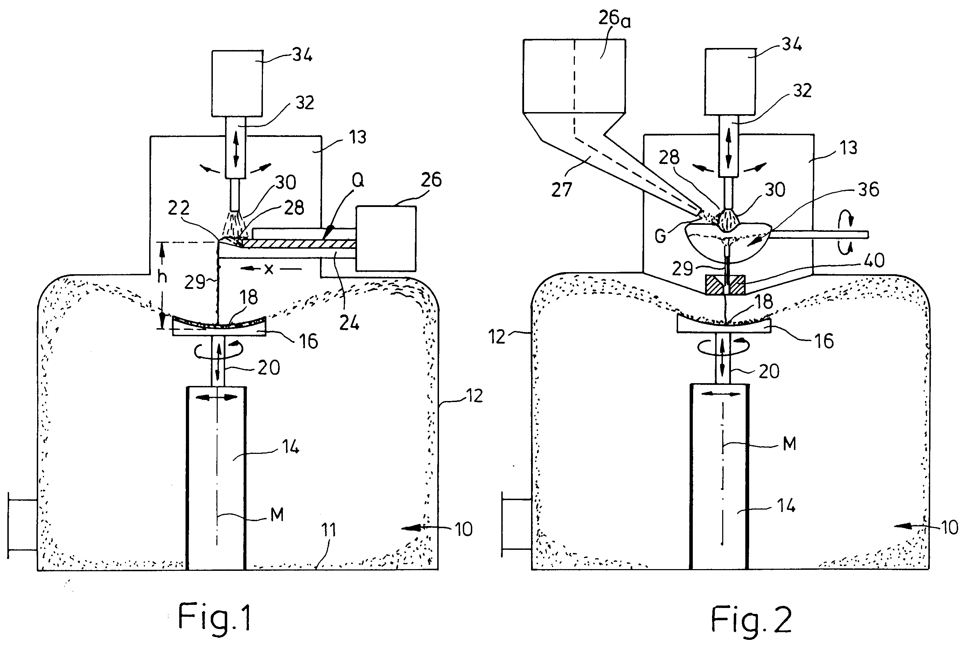

Beim Ausführungsbeispiel der Fig. 2 ist unterhalb des Plasmabrenners 32 ein kippbarer wassergekühlter Kupfertiegel 36 vorgesehen, dessen Kipphalterung mit 38 bezeichnet ist. Dieser Kupfertiegel 36 fängt ein Granulat G auf, welches im durch eine geneigte Zuführung 27 eines Dosier- und Mischgefäßes 26ₐ zugeleitet und über ihm erschmolzen wird.

Beim Kippen des Kupfertiegels 36 wird der Schmelzestrom 29 durch eine beheizbare Düse 40 dem Zentrum der Scheibe 16 zugeführt.

Der Hochtemperaturbereich der Schmelzzone 28, des Brennerstrahles 30 sowie der Wehrkante 22 bzw. des Kupfertiegels 36 sind in einem zentrischen Kapselhut 13 im Deckelende des Pulverauffangbehälters 10 angeordnet.

### Beispiel 1:

Vorgeschmolzene Wolframkarbidstangen mit weiten von ⌀ 25 mm und 500 mm Länge wurden kontinuierlich einem Argon-Plasmabrenner 32 nach Fig. 1 mit einer Brennerleistung von 100 kW zugeführt, wobei die Abschmelzmenge 25 kg/h betrug. Die flüssigen Wolframkarbidschmelze wurde auf 2900°C erhitzt und in einem dünnen Schmelzestrahl 29 (⌀ 3 mm / senkrecht, d.h. 90°) auf die aus Kupfer geformte wassergekühlte Abkühlscheibe 16 gegossen.

Durch die hohe Drehgeschwindigkeit von 7500 U/min entstanden sehr feine Schmelztröpfchen, die zu sphärischem WSC führten, welches im Durchmesserbereich zwischen 120 und 250 µm lag. Die Dichte betrug 17 g/cm³. Das sphärische WSC besaß eine feinlamellare Struktur, die Härte lag bei 3050 HV 0,5.

### Beispiel 2:

Das Beispiel 1 wurde wiederholt, jedoch wurde die Schmelztemperatur auf 3200°C erhöht. Im Ergebnis entstanden sphärische WSC-Teilchen in einem Durchmesserbereich zwischen 75 und 150 µm. Die Härte betrug 3250 HV 0,5.

### Beispiel 3:

Das Beispiel 1 wurde wiederholt, jedoch wurde die Drehgeschwindigkeit der Abkühlscheibe 16 auf 15.000 U/min gesteigert. Es entstand spährisches WSC, das in einem Durchmesserbereich zwischen 30 und 80 µm lag. Die Härte wurde mit 3650 HV 0,5 bestimmt.

### Beispiel 4:

Wolfram-Metallpulver und Graphitpulver wurden entsprechend der notwendigen Stöchiometrie für Wolframkarbid homogen vermischt und kontinuierlich dem kippbaren wassergekühlten Kupfertiegel 36 der Fig. 2 zugeführt (300 g/min). Nach dem Aufschmelzen in der Argon-Plasmaflamme 30 wurde die Schmelze kontinuierlich über die beheizte Graphitdüse 40 eines Durchmessers von 4 mm -- zur Erzeugung eines definierten Schmelzestrahles 29 -- senkrecht auf die schnell rotierende wassergekühlte Abkühlscheibe 16 gegossen.

Die Schmelztemperatur betrug 3100°C, die Drehgeschwindigkeit der Abkühlscheibe 16 dabei 12.500 U/min. Zur Verbesserung der Abkühlbedingungen wurden die WSC-Schmelztröpfchen zusätzlich mit Helium begast. Es enstanden sphärische WSC-Teilchen mit einem Durchmesser zwischen 60 und 100 µm, wobei die Härte 3600 HV 0,5 betrug.

### Beispiel 5:

Molybdän- und Graphitpulver in einer Körnung jeweils bis zu 2 mm wurden entsprechend der Zusammensetzung von Mo₂C homogen gemischt und dem wassergekühlten Cu-Tiegel 36 der Fig. 2 kontinuierlich zugeführt. Der Materialeintrag betrug 250 g/min. Das Schmelzen des Molybdänkarbids erfolgte mit einem Argon-Plasmabrenner 32 (Leistung 75 kW).

Die Mo₂C-Schmelze wurde ca. 300°C über dem Schmelzpunkt von Mo₂C überhitzt und über die graphitbeheizte Düse 40, die zur Bildung eines definierten Schmelzestrahles 29 von 3 mm Durchmesser diente, auf die wassergekühlte rotierende Abkühlscheibe 16 gegossen, deren Rotationsgeschwindigkeit 10.000 U/min betrug.

Es entstanden sphärische Molybdänkarbid-Teilchen eines Durchmesserbereiches von 70 - 120 µm. Durch die Rascherstarrung der Mo₂C-Tröpfchen wurde ein extrem fenes und homogenes Gefüge erzeugt, welches die Ursache für die hohe Härte von 2200 HV 0,5 ist; normal hergestelltes Mo₂C besitzt eine Härte von ca. 1500-1600 HV.

### Beispiel 6:

Chromoxidpulver (Cr₂O₃) wurde kontinuierlich dem wassergekühlten Cu-Tiegel 36 der Fig. 2 zugeführt. Der Materialeintrag betrug 400 g/min. Das Cr₂O₃-Pulver wurde mittels Argon-Plasmabrenner 32 (Leistung 100 kW) aufgeschmolzen. Bei einer Schmelztemperatur von 2400°C wurde die Schmelze durch eine Bornitrid (BN)-beschichtete Graphitdüse 40 mit einem Durchmesser von 3 mm gegossen, um einen definierten Schmelzestrahl zu erzeugen. Die BN-Beschichtung war hier notwendig, um eine Reduktion des Chromoxids mit Kohlenstoff zu unterbinden; bekanntermaßen verschlechtert freies Chrom die Eigenschaften des Chromoxids.

Der Chromoxidschmelzestrahl traf auf die mit 7500 U/min rotierende Abkühlscheibe 16 auf, und der Schmelzestrahl 29 zerstäubte in feine Schmelzetröpfchen. Im Resultat der Rascherstarrung entstanden spährische Chromoxidteilchen mit einem Durchmesser von 60-120 µm. Das Gefüge war extrem homogen und fein.

### Beispiel 7:

Aluminiumoxid-Pulver (Al₂O₃) und Zirkonoxid-Pulver (ZrO₂) wurden im Verhältnis 57,4 : 42,6 Gew.-% (eutektische Zusammensetzung) homogen vermischt und über das Materialzufuhrsystem der Fig. 2 dem wassergekühlten Cu-Schmelztiegel 36 zugeführt, wobei der Materialeintrag 500 g/min betrug. Das Erschmelzen erfolgte mittels eines Argon-Plasmabrenners 32 (Leistung 100 kW), wobei eine Schmelzetemperatur von 2300°C eingestellt wurde. Die Schmelze wurde über eine beheizte Graphitdüse 40 zu einem runden Schmelzestrahl 29 eines Durchmessers von etwa 3 mm geformt und traf anschließend auf die mit Chrom beschichtete rotierende Abkühlscheibe 16 einer Drehgeschwindigkeit von 15.000 U/min auf. Durch diese hohe Drehgeschwindigkeit wurde der Schmelzestrahl in feinste Tröpfchen zerstäubt, wobei nach dem raschen Erstarren der Schmelzetröpfchen spährische Al₂O₃-ZrO₂-Teilchen im Durchmesserbereich zwischen 20-60 µm entstanden sowie -- durch die extrem rasche Erstarrung --eine amorphe Struktur in den Teilchen. Erst oberhalb 1000°C kam es zur Bildung von Nanokristalliten, die z.B. bei 1500°C eine Korngröße von 50 bis 150 nm besitzen.

Diese sehr vorteilhafte Mikrostruktur kann zur Herstellung von Strukturkeramiken mit deutlich verbesserten Eigenschaften, insbesondere der Bruchzähigkeit, genutzt werden.

## Patentansprüche

1. Verfahren zur schmelzmetallurgischen Herstellung von Hartstoffen oder Oxiden mit rascherstarrter, extrem feiner Gefügestruktur in sphärischer Morphologie, bei dem pulverförmige oder feste Einsatzstoffe durch Plasma geschmolzen und danach durch rasche Abkühlung zur Erstarrung geführt.

2. Verfahren nach Anspruch 1, dadurch gekennzeichnet, daß als Hartstoffe Karbide wie WC-W₂C, Mo₂C, TiC, TaC, SiC, B₄C und/oder Boride, z.B. TiB₂, Zr₂, oder daß Oxide wie Al₂O₃, ZrO₂, MgO, Cr₂O₃, CaO und Gemische daraus eingesetzt werden.

3. Verfahren nach Anspruch 1 oder 2, dadurch gekennzeichnet, daß die Einsatzstoffe mit einer Plasmaflamme geschmolzen werden, die gegebenenfalls mittels Argon, Helium oder Wasserstoff bzw. Gemischen daraus erzeugt wird.

4. Verfahren nach einem der Ansprüche 1 bis 3, dadurch gekennzeichnet, daß die Schmelze mittels eines beweglichen, wassergekühlten Schmelztiegels, insbesondere in einer festen wassergekühlten Spezialschmelzkokille, gehalten wird.

5. Verfahren nach einem der Ansprüche 1 bis 4, dadurch gekennzeichnet, daß die Schmelze durch eine beheizbare Düse geführt und zu einem Schmelzestrahl geformt wird.

6. Verfahren nach einem der Ansprüche 1 bis 5, dadurch gekennzeichnet, daß die Schmelze in Abhängigkeit von den herzustellenden Werkstoffen mit 100° bis 500°C überhitzt und/oder einer schnell bewegten wassergekühlten Oberfläche zugeführt wird.

7. Verfahren nach einem der Ansprüche 1 bis 6, dadurch gekennzeichnet, daß es samt Abkühlung der Schmelztropfen unter Schutzgas wie Ar, He, N₂, H₂, Co₂ bzw. Gemischen daraus durchgeführt wird.

8. Vorrichtung zur schmelzmetallurgischen Herstellung von Hartstoffen oder Oxiden, insbesondere zur Durchführung des Verfahrens nach wenigstens einem der voraufgehenden Patentansprüchen, gekennzeichnet durch einen bewegbar angebrachten Plasmabrenner (32) über einer Zuführung (24, 27) für Einsatzgut (G, Q), welche über einer schnell bewegbaren gekühlten Oberfläche (18) vorgesehen ist.

9. Vorrichtung nach Anspruch 8, dadurch gekennzeichnet, daß die schnell bewegte wassergekühlte Oberfläche an einer rotierenden Scheibe (16) vorgesehen und/oder über der Abkühlscheibe (16) eine aus Graphit bestehende und gegebenenfalls beschichtete Düse (40) angeordnet ist.

10. Vorrichtung nach Anspruch 8 oder 9, gekennzeichnet durch eine Drehgeschwindigkeit der rotierenden Scheibe (16) zwischen 1000-20.000 U/min, vorzugsweise zwischen 7500 - 15.000 U/min.

11. Vorrichtung nach einem der Ansprüche 8 bis 10, dadurch gekennzeichnet, daß die rotierende Scheibe (16) zur Verminderung des Verschleißes beschichtet ist, wobei die Beschichtung gegebenenfalls aus Cr, TiC, TiN, TiCN od.dgl. besteht.

12. Vorrichtung nach einem der Ansprüche 8 bis 11, gekennzeichnet durch eine Zusatzkühlung mit Spezialgasdüsen zur weiteren Abkühlung der Schmelzetropfen.

13. Verwendung von nach dem Verfahren der Ansprüche 1 bis 7 hergestellten rascherstarrten kugeligen Hartstoffe zur Beschichtung von Lagern für drehende Maschinenelemente, insbesondere für Pumpen.

14. Verwendung von nach dem Verfahren der Ansprüche 1 bis 7 hergestellten rascherstarrten kugeligen Hartstoffen zur Formung des Körpers einer Diamantbohrkrone.
